# EUROPÄISCHE PATENTSCHRIFT

(11) **EP 0 328 998 B1**
(45) Veröffentlichungstag und Bekanntmachung des Hinweises auf die Patenterteilung: **15.06.1994**
(21) Anmeldenummer: 89102089.3
(22) Anmeldetag: 08.02.1989
(51) Int. Cl.: G11B 5/704

(54) **Magnetischer Aufzeichnungsträger**
Magnetic-recording medium
Milieu d'enregistrement magnétique

(30) Priorität: 17.02.1988 DE 3804830
(43) Veröffentlichungstag der Anmeldung: 23.08.1989
(73) Patentinhaber: BASF Magnetics GmbH, 68165 Mannheim (DE)
(72) Erfinder: Credner, Hans-Heinrich, Dr., D-8021 Hohenschäftlarn (DE); Gerum, Johannes, Dr., D-8034 Germering (DE)
(74) Vertreter: Münch, Volker, Dr.

(56) Entgegenhaltungen:
- EP-A- 0 101 020
- DE-A- 2 744 309
- US-A- 4 698 279

## Beschreibung

Die Erfindung betrifft ein Verfahren zur Herstellung eines magnetischen Aufzeichnungsträgers, bestehend aus einem Schichtträger mit einer darauf aufgebrachten magnetischen Schicht sowie einer Rückseitenschicht auf der anderen Seite des Schichtträgers, welche in einem polymeren Bindemittel dispergierte Füllstoffe wie Ruß und Mattierungsmittel mit unterschiedliches Teilchengröße enthält,

Magnetische Aufzeichnungsträger für Audio-, Video- oder Computeranwendungen besitzen eine magnetische Aufzeichnungsschicht mit glatter Oberfläche, um verbesserte elektroakustische und speichertechnische Daten zu erzielen. Magnetbänder mit zu glatten Oberflächen verursachen jedoch häufig Wickelprobleme. Ungleichmäßige Auf- und Abwicklung führen zu Änderungen in der Bandspannung und beeinträchtigen das Laufverhalten des Magnetbandes und verursachen Schwankungen im Bandausgangssignal. Besonders ausgeprägt treten derartige Fehler unter klimatisch ungünstigen Bedingungen auf. Ferner verursachen zu glatte Oberflächen Gleitreibungsprobleme besonders unter tropischen Klimabedingungen.

Zur Vermeidung dieser Fehler werden magnetische Aufzeichnungsträger mit einer Rückseitenbeschichtung auf der Oberfläche des Schichtträgers entgegengesetzt zur magnetischen Aufzeichnungsschicht versehen.

Es ist allgemein bekannt, daß bei magnetischen Aufzeichnungsträgern, welche mit einer Rückseitenmattierung versehen sind, Unebenheiten in dieser Rückschicht auf die Oberfläche der Magnetschicht übertragen werden und diese dabei derart schädigen, daß eine Verschlechterung der magnetischen Eigenschaften insbesondere des Signal-Rausch-Verhältnisses (S/N) daraus resultiert. Um gute Laufeigenschaften zu erzielen, erhalten Rückseitenmattierungen häufig eine rauhe Oberfläche, wobei Halbfabrikate von aufgewickelten Magnetbändern oder sogenannte Pancakes, die längere Zeit gelagert werden, erheblich an Qualität der speichertechnischen Daten leiden, dadurch, daß rauhe Stellen des Rückgusses in die Oberfläche der Magnetschicht eingedrückt werden.

Eine weitere kritische Eigenschaft von Rückseitenmattierungen ist die Haftung auf der Trägerfolie und der Schichtzusammenhalt, damit im Kontakt mit der Magnetschicht im Wickel keine Überkaschierung von Mattierungskomponenten erfolgen kann, insbesondere nicht bei längerer Lagerung, gegebenenfalls bei höheren Temperaturen oder unter stärkerem Bandzug. Überkaschierte Mattierungsteilchen könnten leicht zu einer Erhöhung des Drop-out-Niveaus der Magnetschicht führen.

Aufgabe der Erfindung ist es, einen magnetischen Aufzeichnungsträger mit einer Rückseitenbeschichtung der eingangs genannten gattungsgemäßen Art zu finden, welcher bei geringer Oberflächenrauhigkeit und niedrigen Gleitreibungswerten gute Wickeleigenschaften, sehr gute speichertechnische Ergebnisse und ein stabiles Drop-out-Niveau liefert, ohne Probleme bezüglich Abrieb oder Haftung zu erbringen.

Es wurde nun gefunden, daß magnetische Aufzeichnungsträger mit Rückseitenbeschichtungen die oben genannten Anforderungen erfüllen, wenn für die Herstellung der Rückseitenmattierungsbeschichtung als Dispergator eine Verbindung der allgemeinen Formel I verwendet wird. 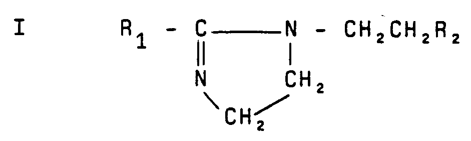
in der R₁ geradkettige oder verzweigte gesättigte oder ungesättigte Kohlenwasserstoffreste mit 2 bis 24 Kohlenstoffatomen und R₂ eine Hydroxyl- oder Aminogruppe bedeuten.

Diese als Dispergatoren eingesetzten Imidazolinderivate nach Formel I werden nach dem erfindungsgemäßen Verfahren der zu dispergierenden Mischung in einer Menge von 0,05 bis 4, vorzugsweise 0,1 - 2 Gewichtsprozent, bezogen auf die Menge an Füllstoffen, zugegeben. Werden zur Formulierung des Rückseitenmattierungslackes weitere dem Stand der Technik entsprechende Zusatzstoffe eingesetzten die neben anderen Wirkungen, wie Verbesserung der Gleiteigenschaften und anderer mechanischer Eigenschaften, auch die Dispergierung beeinflussen, so bleibt die vorteilhafte Wirkung der Verbindungen nach Formel I erhalten.

Für den Einsatz im erfindungsgemäßen Verfahren sind beispielsweise geeignete Imidazolinderivate 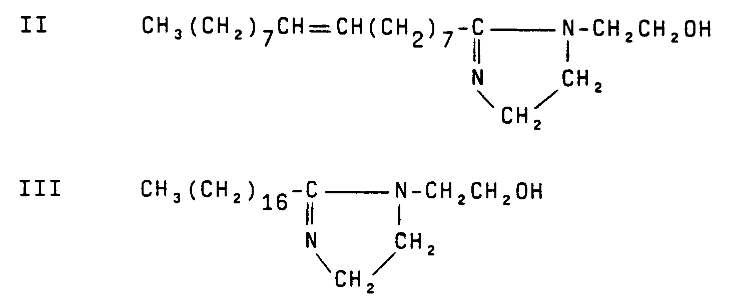 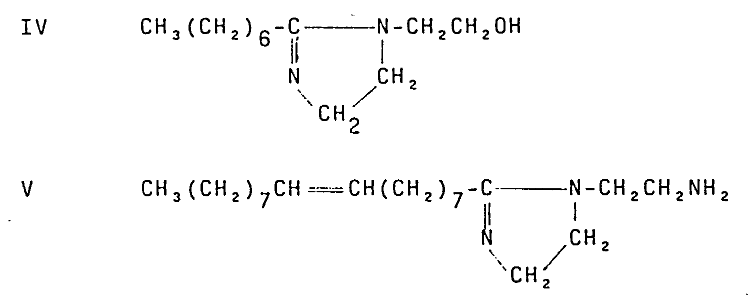
Die Kohlenwasserstoffreste R1 können auch einen Fettrest aus Naturstoffen wie beispielsweise Kokosnuß- oder Sojaöl bedeuten.

Aus der DE-A 27 44 309 sind an sich Verbindungen, welche der allgemeinen Formel I entsprechen, als Zusatz zur magnetischen Schicht bekannt, jedoch ist es überraschend, daß entsprechende Verbindungen als Zusätze für die unmagnetische Rückschicht, welche wie weiter unten beschrieben, Füllstoffe sehr unterschiedlicher Teilchengröße enthält, die der Erfindung zugrundeliegende Aufgabe lösen können.

Rückseitenmattierungslacke gemäß der Erfindung können für alle Typen von Magnetbändern eingesetzt werden. Durch geeignete Wahl von einem Rußpigment oder falls erforderlich auch mehreren verschiedenen Rußpigmenten und einem oder mehreren weiteren aus dem Stand der Technik bekannten Füllstoffen, auch Mattierungsmittel genannt, können die unterschiedlichen Anforderungen an die Oberflächenrauhigkeit der Rückseitenbeschichtung eingestellt werden. Mattierungsmittel für die Rückseitenschicht sind beispielsweise in der DE-OS 31 32 604 beschrieben. So können, wie aus den nachfolgenden Beispielen hervorgeht, sowohl für Audio- und Studiosorten, für 2,54 cm (1") breite B- und C-Standardbänder für Professional-Anwendungen , für 1,27 cm (1/2")-Videobänder oder für 8 mm-Videobänder mittels des erfindungsgemäßen Verfahrens jeweils geeignete Rückschichten hergestellt werden.

Im Rahmen der Erfindung können als Bindemittel thermoplastische Harze, wärmehärtbare Harze oder reaktive Harze sowie Gemische derselben eingesetzt werden. Dabei kann es sich um solche Harze handeln, wie sie üblicherweise für magnetische Aufzeichnungsträger verwendet werden oder präpolymere Vorstufen davon. Es ist günstig, wenn mindestens eine Bindemittelkomponente der in Kombination verwendeten Bindemittel Glasübergangstemperaturen von 40 bis etwa 120 °C besitzt, einen Erweichungspunkt von höchstens 150 °C, ein durchschnittliches Molekulargewicht von 5000 bis 150 000 und einen Polymerisationsgrad von etwa 50 bis 2000 aufweist.

Spezifische Beispiele für einsetzbare Bindemittel sind thermoplastische Harze wie Vinylchlorid-Vinylacetat-Copolymere, Vinylchlorid/Vinylidenchlorid-Copolymere, Vinylchlorid/Acrylnitril-Copolymere, Acrylester/Acrylnitril-Copolymere, Acrylester/Vinylidenchlorid-Copolymere, Acrylester/Styrol-Copolymere, Methacrylester/Acrylnitril-Copolymere, Methacrylester/Vinylidenchlorid-Copolymere, Methacrylester/Styrol-Copolymere, Urethanelastomere, Vinylidenchlorid/Acrylnitril-Copolymere, Butadien/Acrylnitril-Copolymere, Polyamidharze, Polyvinylbutyral, Celluloseharze, zum Beispiel Celluloseacetatbutyrat, Cellulosediacetat, Cellulosepropionat, Nitrocellulose, Styrol/Butadien-Copolymere, Polyesterharze, Chlorvinylether/Acrylester-Copolymere, Aminoharze und verschiedene Kautschukharze und thermisch härtende oder härtbare Harze wie Phenolharze, Epoxyharze, beispielsweise ein Epichlorhydrin und Bisphenol A aufweisendes Epoxyharz, härtbare Polyurethanharze, Harnstoffharze, Melaminharze, Alkydharze, härtbare Acrylharze, Polyisocyanate, beispielsweise ein Tolylendiisocyanat und Trimethylolpropan enthaltendes Polyisocyanat sowie Polyamine.

Als wärmehärtbare Harze oder reaktive Harze können solche eingesetzt werden, welche im Zustand der Beschichtungslösungen ein Molekulargewicht von höchstens 200 000 aufweisen und bei denen nach dem Aufbringen und Trocknen beim Erhitzen eine Kondensations- oder Additionsreaktion bis zu einem unbegrenzten Molekulargewicht eintritt. Unter diesen Harzen sind solche, welche bis zur thermischen Zersetzung nicht erweichen oder schmelzen, bevorzugt. Speziell erwähnt seien beispielsweise ein Phenolharz, ein Epoxyharz, ein wärmehartbares Polyurethanharz, ein Harnstoffharz, ein Melaminharz, ein Alkydharz, ein Silikonharz, ein acrylisches Reaktivharz, ein Epoxy-Polyamidharz, ein Nitrocellulose-Melaminharz, ein Gemisch eines hochmolekularen Polyesterharzes mit einem Isocyanatprepolymeren, ein Gemisch von Methacrylat-Copolymeren mit einem Diisocyanatprepolymeren, ein Gemisch eines Polyesterpolyols mit einem Polyisocyanat, ein Harnstoff-Formaldehydharz, ein Gemisch eines nieder-molekularen Glykol/hochmolekularen Diol/Triphenylmethantriisocyanats, ein Polyaminharz oder ein Gemisch derselben.

Im Rahmen der Erfindung können für die Herstellung der magnetischen Aufzeichnungsschicht alle bekannten magnetischen Pigmente wie -Eisenoxide, Cobalt-dotierte Eisenoxide, Chromdioxide, Reineisen-Metallpigmente oder Ferrite wie beispielsweise Bariumferrit eingesetzt werden.

Die Erfindung wird nachfolgend anhand von Beispielen erläutert, die jedoch nur zur Erklärung dienen, ohne die Erfindung zu begrenzen. Der nach dem erfindungsgemäßen Verfahren hergestellte magnetische Aufzeichnungsträger kann auf den verschiedensten Gebieten in vielfältiger Weise eingesetzt werden, beispielsweise als Audio-Band, Video-Band, Computerband oder Audio-Digitalband.

### Beispiel 1

Auf einer Seite eines Schichtträgers bestehend aus Polyethylentherephthalat mit einer Dicke von 21 »m wird eine magnetische Beschichtung aufgebracht, die zusammengesetzt ist aus einem Bindemittelgemisch (Vinylchlorid-Vinylacetat-Copolymere, Polyesterurethan und ein Vernetzungsmittel), einem Chromdioxidpigment, Netzmittel, Dispergator, Weichmacher und Gleitmittel. Die Magnetschicht weist eine Dicke von 5 »m auf und wird unter bekannten Bedingungen für die Herstellung von Videobändern ausgebildet.

Für die Herstellung der erfindungsgemäßen Rückseitenmattierungsrezeptur wird in einer Kugelmühle ein Gemisch folgender Zusammensetzung 1 1/2 Stunden gemahlen:

| | Gewichtsteile |
|---|---|
| Tetrahydrofuran | 450 |
| Cyclohexanon | 80 |
| Polyurethan (Estane 5707) | 17 |
| Vinylchlorid-Vinylacetat-Vinylalkohol-Copolymeres (Vinylite VAGH) | 19 |
| Imidazolin-Derivat nach Formel III (Miramin, Hersteller Miranol Chemical Company Inc.) | 0,50 |
| Ruß (Teilchengröße: 50 nm; BET-Oberfläche 30 m²/g) | 27 |
| Siliziumdioxid (Agglomeratgröße 4 »m) | 3,5 |
| Calciumcarbonat (Sokal) | 5 |
| Myristinsäure | 1 |
| Diisocyanat (Desmodur L der Bayer AG) | 8 |

Der erhaltene Mattierungslack wird auf der Seite des Substrats aufgetragen, die der Seite gegenüberliegt, auf der die magnetische Beschichtung vorher vergossen wurde. Die Beschichtung mittels eines Extrudergießers erfolgt derart, daß eine Schichtdicke im trockenem Zustand von 1,3 »m erhalten wird. Nach dem Beguß kann eine Wärmebehandlung des Magnetbandes zum Beispiel 55 °C für die Dauer von 48 Stunden zur Beschleunigung der Vernetzungsreaktion durchgeführt werden.

### Vergleichsbeispiel 1

Zum Vergleich wird ein zweiter Mattierungslack hergestellt mit dem Unterschied, daß anstelle der erfindungsgemäßen Dispergatoren Miramin ein handelsüblicher Dispergator wie zum Beispiel Lecithin in der gleichen Menge eingesetzt, und die Beschichtung wie oben durchgeführt wird. Lecithin ist ein Glycerinphosphorsäureester.

Bei der Prüfung verschiedener Eigenschaften wurden folgende Unterschiede festgestellt:

| Dispergator | Lackviskosität (mPa · sec.) | Oberfläche | | Polierspuren (Dauerlauftest) |
|---|---|---|---|---|
| | | Glanz (Skalenteile) | Ra (»m) | |
| "Imidazolin" | 85 | 3,5 | 0,065 | fast keine |
| Lecithin | 55 | 4,5 | 0,064 | stark streifig |

Die deutlich höhere Lackviskosität zeigt die bessere Dispergierwirkung des erfindungsgemäßen Dispergators, wobei gleichzeitig die für ein Video-Profi-Material erforderliche Rauhigkeit erreicht wurde. Ein Dauerlauftest (100faches Umspulen einer 1"-Magnetbandspule mit der Bandlänge für 1 Stunde Spielzeit in einem 1"-B-Standard-Gerät) zeigt, daß nach erfolgter strapazierender Behandlung des Magnetbandes, das mit dem erfindungsgemäßen Rückseitenmattierungslack beschichtet wurde, auf der Rückseite fast keinerlei Polierspuren (Schleifspuren, verursacht durch mechanische Beanspruchung der Rückseitenbeschichtung durch Führungselemente, wie Stahlstifte oder Umlenkhülsen im elektroakustischen Aufnahme-und Wiedergabegerät) festgestellt wurden. Dagegen wies das mit dem handelsüblichen Dispergator hergestellte Magnetband starke Schleifspuren auf.

### Beispiel 2

Auf einer Seite eines Schichtträgers entsprechend Beispiel 1 mit einer Dicke von 10 »m wird eine magnetische Beschichtung aufgebracht, die zusammengesetzt ist aus einem Bindemittelgemisch (Polyesterurethan, Polyvinylformal und ein Vernetzungsmittel), einem Reineisen-Metallpigment, Weichmacher und Gleitmittel. Die Magnetschicht weist eine Dicke von 3 »m auf und wird unter bekannten Bedingungen für die Herstellung von Videobändern aufgebracht.

In einer Kugelmühle wird ein Gemisch folgender Zusammensetzung 6 Stunden gemahlen:

| | Gewichtsteile |
|---|---|
| Tetrahydrofuran | 450 |
| Cyclohexanon | 80 |
| Polyurethan (Estane 5707) | 20 |
| Vinylite VAGH | 24 |
| Imidazolin-Derivat nach Formel III | 0,52 |
| Ruß (Teilchengröße: 18 nm; BET-Oberfläche: 265 m²/g) | 26 |
| Aerosil (Kieselsäure: Primärteilchen 40 nm, BET-Oberfläche 200 m²/g) | 7 |
| Myristinsäure | 1 |
| Diisocyanat (Desmodur L der Bayer AG) | 8 |

Der fertig gemahlene Mattierungslack wird auf der anderen Seite des Substrats aufgetragen, derart, daß eine Trockenschichtdicke von 1 »m erhalten wird.

### Vergleichsbeispiel 2

Zum Vergleich wird ein zweiter Mattierungslack hergestellt mit dem Unterschied, daß anstelle des erfindungsgemäßen Dispergators Miramin der Dispergator Lecithin in gleicher Menge eingesetzt wird.

Bei der Prüfung verschiedener Eigenschaften wurden folgende Unterschiede festgestellt:

| Dispergator | Oberflächeneigenschaften | | |
|---|---|---|---|
| | Glanz (Skalenteile) | Ra (»m) | R3z (»m) |
| "Imidazolin" | 78 | 0,015 | 0,105 |
| Lecithin | 64 | 0,022 | 0,151 |

Magnetbänder für das 8 mm-System oder für R-DAT benötigen sehr glatte Rückseitenmattierungen, die sich durch den Einsatz des erfindungsgemäßen Dispergators in eindrucksvoller Weise herstellen lassen, wie die Tabelle zeigt.

### Beispiel 3

Auf einer Seite eines Schichtträgers gemäß Beispiel 1 mit einer Dicke von 15 »m wird eine magnetische Schicht aufgebracht, die zusammengesetzt ist aus einem Bindemittelgemisch (Polyesterurethan, Estane 5707 und Vinylite VAGH), einem Co-dotierten γ-Eisenoxidpigment, Weichmacher und Gleitmittel. Die Magnetschicht weist eine Dicke von 5 »m auf und wird unter bekannten Bedingungen der Videobandproduktion hergestellt.

In einer Kugelmühle wird ein Gemisch folgender Zusammensetzung 5 Stunden gemahlen

| | Gewichtsteile |
|---|---|
| Tetrahydrofuran | 450 |
| Cyclohexanon | 80 |
| Polyesterurethan, Estane 5707 | 22 |
| Vinylite VAGH | 20 |
| Imidazolin-Derivat nach Formel II | 0,6 |
| Ruß (Teilchengröße: 20 nm; BET-Oberfläche: 250 m²/g) | 30 |
| Aerosil (Kieselsäure: Primärteilchen 40 nm, BET-Oberfläche 200 m²/g) | 10 |
| Myristinsäure | 1,5 |
| Diisocyanat (Desmodur L der Bayer AG) | 9,5 |

Der fertig gemahlene Rückseitenmattierungslack wird auf der anderen Seite des Substrats mit einer Trockenschichtdicke von 1,3 »m aufgetragen

### Vergleichsbeispiel 3

Ein weiterer Mattierungslack wird hergestellt der jedoch anstelle des erfindungsgemäßen Dispergators das handelsübliche Produkt Gafac (komplexer Phosphatester von nichtionogenen Netzmitteln des Ethylenoxidaddukt-Typs) enthält. Ferner wurde eine Vergleichsprobe ohne Rückseitenschicht hergestellt. Die Materialien werden zu 1/2¨-Bändern getrennt und geprüft. Dabei wird die verbesserte Oberfläche der Rückseitenmattierung mit einem erfindungsgemäßen Dispergator deutlich sichtbar, meßbar durch den höheren Glanz und die geringere Mittenrauhtiefe Ra. Ferner wird erkennbar, daß der Signalrauschabstand S/N_{L} des unmattierten Magnetbandes (als Vergleich gleich 0 dB gesetzt) durch die Rückseitenmattierung mit dem erfindungsgemäßen Dispergiermittel weniger herabgesetzt wird als mit einem Dispergator gemäß dem Stand der Technik.

| Dispergator | Oberflächeneigenschaft | | S/N_{L} (dB) |
|---|---|---|---|
| | Glanz (Skalenteile) | Ra (»m) | |
| "Imidazolin" | 72 | 0,025 | -0,2 |
| Gafac | 63 | 0,031 | -0,8 |
| Vergleich ohne Mattierung | -- | ----- | 0 |

Des weiteren hat sich gezeigt, daß die nach dem erfindungsgemäßen Verfahren hergestellten Rückschichtzusammensetzungen gemäß Beispiel 1 - 3 als Dispersion mindestens 6 Monate haltbar waren, ohne daß zum Einsatz zwecks Beguß eine Redispergierung erforderlich war. Dagegen waren die Zusammensetzungen gemäß den Vergleichsbeispielen 1 - 3 nach einer entsprechenden Standzeit nicht mehr vergießbar.

Zusammengefaßt lassen sich die Vorteile der nach dem erfindungsgemäßen Verfahren hergestellten Magnetbänder wie folgt beschreiben:
- niedrige Oberflächenrauhigkeit
- niedriger Abrieb der Rückseitenschicht
- praktisch keine Beeinflussung des S/N-Abstandes durch die Rückschicht
- durch entsprechendes Mischen von Rußpigmenten und Mattierungsmitteln unterschiedlicher Teilchengröße lassen sich unterschiedliche Rauhigkeiten der Rückschicht bei gleichzeitig hervorragender Standzeit der Rückschichtzusammensetzung erzielen

## Patentansprüche

1. Verfahren zur Herstellung eines magnetischen Aufzeichnungsträgers, bestehend aus einem Schichtträger mit einer darauf aufgebrachten magnetischen Schicht sowie einer Rückseitenschicht auf der anderen Seite des Schichtträgers, welche in einem polymeren Bindemittel dispergierte Füllstoffe wie Ruß und Mattierungsmittel mit unterschiedlicher Teilchengröße enthält, dadurch gekennzeichnet, daß zum Dispergieren der Füllstoffe der Rückseitenschicht eine Verbindung der allgemeinen Formel I 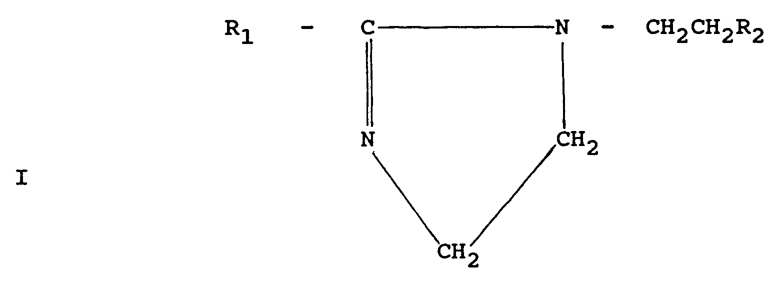 verwendet wird, in der
R₁ geradkettige oder verzweigte gesättigte oder ungesättigte Kohlenwasserstoffreste mit 2 bis 24 Kohlenstoffatomen
und
R₂ eine Hydroxyl- oder Aminogruppe
bedeuten.

2. Verfahren nach Anspruch 1, dadurch gekennzeichnet, daß die Verbindung I in einer Menge von 0,05 bis 4 Gewichtsprozent, bezogen auf die Menge an Füllstoffen, der Rückschichtzusammensetzung zugesetzt wird.

## Claims

1. A process for the production of a magnetic recording medium, consisting of a substrate with a magnetic layer applied thereon and, on the other side of the substrate, a backing coating which contains, dispersed in a polymeric binder, fillers, such as carbon black, and dulling agents having different particle sizes, wherein a compound of the general formula I 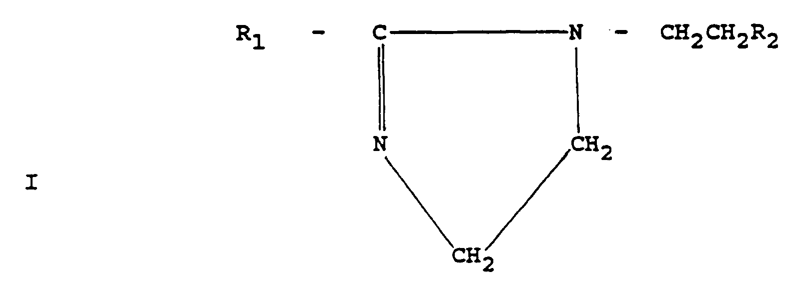 where R₁ is a straight-chain or branched, saturated or unsaturated hydrocarbon radical of 2 to 24 carbon atoms and R₂ is hydroxyl or amino, is used for dispersing the fillers of the backing coating.

2. A process as claimed in claim 1, wherein the compound I is added to the backing coating composition in an amount of from 0.05 to 4 percent by weight, based on the amount of fillers.

## Revendications

1. Procédé de fabrication d'un support d'enregistrement magnétique constitué d'une couche support sur laquelle est appliquée une couche magnétique ainsi qu'une couche de dos sur l'autre face de la couche support, qui contient des charges telles que suie et agent de matité, dispersées dans un liant polymère et à grosseurs de particules différentes, caractérisé par le fait que pour disperser les charges de la couche de dos, on utilise un composé de la formule générale I 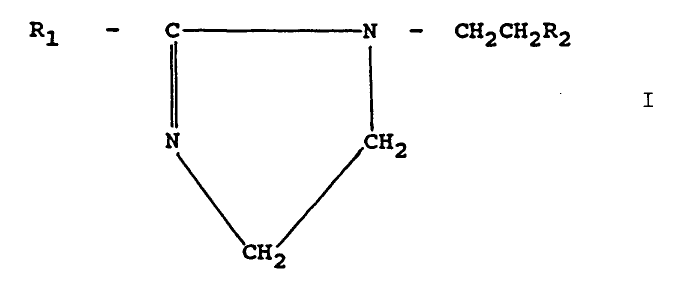 dans laquelle
R₁ représente un reste hydrocarburé de 2 à 24 atomes de carbone, saturé ou insaturé, à chaîne droite ou ramifiée,
et
R₂, un groupe hydroxyle ou amino.

2. Procédé selon la revendication 1, caractérisé par le fait que le composé I est ajouté à la composition de la couche de dos en quantité de 0,05 à 4 % en poids rapportée à la quantité des charges.
